# FASCICULE DE BREVET EUROPEEN

(11) **EP 0 466 540 B1**
(45) Date de publication et mention de la délivrance du brevet: **30.11.1994**
(21) Numéro de dépôt: 91401680.3
(22) Date de dépôt: 21.06.1991
(51) Int. Cl.: F16F 1/36, F16F 15/10

(54) **Dispositif d'amortissement de vibrations**
Schwingungsdämpfungseinrichtung
Vibration damping device

(30) Priorité: 12.07.1990 FR 9008887
(43) Date de publication de la demande: 15.01.1992
(73) Titulaire: ENAC SA, FR-78680 Epone (FR)
(72) Inventeur: ENAC SA, FR-78680 Epone (FR)
(74) Mandataire: Thibon-Littaye, Annick

(56) Documents cités:
- EP-A- 0 020 284
- EP-A- 0 151 464
- EP-A- 0 246 742
- DE-A- 3 608 402
- DE-B- 1 143 679
- DE-U- 7 606 041
- US-A- 2 948 526
- US-A- 3 058 371
- US-A- 4 302 986

## Description

La présente invention concerne un dispositif d'amortissement de vibrations à la résonance mettant en oeuvre un matériau viscoélastique dissipant l'énergie de vibration par l'intermédiaire d'un moyen de couplage audit émetteur.

Il était précédemment connu d'assurer l'amortissement de telles vibrations par un traitement consistant à appliquer en couches libres, par conséquent non contraintes, un matériau amortissant ayant des propriétés viscoélastiques. Mais ce type de traitement s'est souvent révélé peu efficace.

Pour remédier à cela il a été proposé un dispositif, mettant en oeuvre un matériau viscoélastique et apte à associer ledit matériau avec l'émetteur de vibrations par l'intermédiaire d'un moyen de couplage, consistant en une contre-plaque de contrainte de même nature que l'émetteur, maintenue en place soit par collage, soit par un élément de fixation rapporté tel que vis, bague, etc. selon la nature et la configuration du support à traiter.

A titre d'exemple de tels dispositifs d'amortissement de vibrations trouvent leur application dans le traitement des roues de trains, des lames de scies circulaires, des machines tournantes, des engrenages, etc.

L'amortissement des vibrations s'effectue alors, selon un tel dispositif connu, par cisaillement, les unes par rapport aux autres, des fibres du matériau viscoélastique inséré entre le support émetteur de vibrations et la contre-plaque de contrainte qui lui est accouplée par tous moyens de fixation connus. Le degré de couplage entre les trois couches de la structure composite ainsi réalisée conditionne leur capacité à répondre à la vibration comme une entité propre.

Par conséquent une certaine maîtrise du couplage est nécessaire pour l'obtention d'un contact optimum du matériau viscoélastique contre l'émetteur, quelles que soient les conditions d'utilisation.

Cette maîtrise du couplage est difficile et ne saurait être fiable dans les dispositifs d'amortissement connus, car ils sont généralement mis en oeuvre manuellement.

De plus, la mise en place des différents éléments constitutifs du dispositif n'est pas aisée, car elle s'effectue par étapes successives.

La présente invention a pour but de remédier à ces inconvénients en s'affranchissant de la multiplicité des étapes de mise en oeuvre du dispositif et de la maîtrise du serrage lors de l'opération de couplage.

A cet effet l'invention concerne un dispositif d'amortissement de vibrations à la résonance d'un émetteur mettant en oeuvre un matériau viscoélastique dissipant l'énergie de vibration par interaction mutuelle de parties constitutives dudit matériau, ce dispositif étant relié à l'émetteur par l'intermédiaire d'un moyen de couplage, caractérise en ce que le matériau viscoélastique est disposé préalablement et de manière solidaire sur un organe support, pour former avec ce dernier un ensemble unitaire amovible et en ce que ledit organe support forme par lui-même moyen de couplage par lequel ledit ensemble unitaire est apte à être couplé à l'emetteur.

La solution proposée présente un nombre considérable d'avantages essentiellement procurés par l'amovibilité du dispositif constituant un ensemble unitaire indissociable.

Ainsi est évitée toute opération de maintien par collage du matériau sur l'émetteur avant couplage mécanique sur ce dernier, ce qui entraîne des opérations de dégraissage et d'état de surface dudit émetteur.

Est également évitée toute opération de préparation et de coupe d'une feuille de matériau viscoélastique à disposer préalablement sur l'émetteur, parfois de forme complexe et présentant des ajours au niveau du voile d'une roue par exemple.

Dans le cas d'assemblage de pièces par un procédé thermique, celles-ci sont portées à une température pouvant atteindre voire dépasser les 250°C. Or la plupart des matériaux viscoélastiques disponibles sur le marché ne supportent pas une telle température. Selon l'invention une telle situation ne présente plus de problème car le dispositif d'amortissement peut être monté ultérieurement.

Par ailleurs il est très souvent impossible de mettre en oeuvre un traitement antivibratoire annulaire classique pendant ou après montage de tout ou partie d'un train d'engrenages.

Pour remédier à cela et selon une autre caractéristique de l'invention l'organe support est formé par un anneau ouvert, élastiquement déformable, apte à se loger sous contrainte radiale permanente dans une gorge annulaire de retenue correspondante de l'émetteur, par encliquetage élastique par expansion ou par compression et constitue le moyen de couplage.

Une telle caractéristique s'applique bien entendu également à tout autre type de roue qui nécessite alors une simple reprise d'usinage concernant la gorge et qui peut être prévue à la conception. De plus une telle simplicité de mise en oeuvre du dispositif permet à l'utilisateur de prendre en charge le montage, sans occasionner l'immobilisation d'un stock supplémentaire. Egalement, l'utilisateur peut assurer aisément la maintenance et le renouvellement du traitement antivibratoire.

De plus, le dispositif est de faible encombrement et présente deux avantages indéniables, à savoir : un apport de poids très limité, d'où l'absence de problèmes d'équilibrage et le maintien de l'accessibilité initiale.

Selon une autre caractéristique de l'invention le matériau viscoélastique est enserré sous forme de couche entre l'organe support et un élément de contrainte intégré déformable élastiquement de manière à dissiper l'énergie de vibration par cisaillement.

Dans le cas de figure d'une roue, l'implantation en périphérie interne d'un dispositif selon l'invention est particulièrement favorable à un bon transfert d'énergie entre la pièce en résonance, le matériau viscoélastique et sa contrainte élastique.

Dans ces conditions optimales, la section du dispositif est réduite au minimum.

Le rendement du processus de transformation d'énergie (amortissement visqueux) se trouve également optimisé par la mise sous contrainte radiale permanente de l'organe support d'où du matériau viscoélastique.

Selon une autre caractéristique de l'invention l'organe support et l'organe de contrainte constituent avec le matériau viscoélastique intercalés entre eux, une structure multicouches comportant au moins trois couches réunies entre elles, éventuellement par l'intermédiaire d'un adhésif. Il peut s'agir d'un empilement plus important, comportant une série de plusieurs couples matériau viscoélastique et organe de contrainte successifs. Dans certains cas, les différentes couches peuvent être liées entre elles par le matériau viscoélastique lui-même, quand celui-ci est, par exemple, du catouchouc adhérisé ou une résine appropriée. Au cas où un adhésif est utilisé ou choisi avantageusement un adhésif de type structural, c'est-à-dire à hautes performances, comme les cyanoacrylates.

Selon une autre caractéristique de l'invention l'organe de contrainte est dirigé au montage vers l'émetteur de vibrations.

Selon une autre caractéristique de l'invention seul l'organe support est en contact mécanique avec l'émetteur.

Une telle disposition offre selon les essais effectués d'excellents résultats et permet de s'affranchir de la maîtrise du serrage lors de l'opération de couplage du dispositif sur l'émetteur de vibrations.

Selon une autre caractéristique de l'invention l'organe support et l'organe de contrainte sont réalisés à partir d'une feuille d'acier à ressort au carbone ayant des qualités élastiques.

L'invention sera encore illustrée sans être aucunement limitée par la description qui suit, faite en regard des dessins annexés sur lesquels :
La figure 1 est une vue en plan du dispositif d'amortissement de vibrations amovible selon l'invention.
La figure 2 est une vue latérale du dispositif selon la figure 1.
La figure 3 est une vue en coupe axiale d'un dispositif d'amortissement selon la figure 1, disposé dans une roue émettrice de vibrations.
La figure 4 est une vue en coupe du dispositif selon la ligne IV-IV de la figure 3.
La figure 5 est un dispositif d'amortissement de vibrations selon un autre mode de réalisation.
La figure 6 est un dispositif d'amortissement de vibrations selon un autre mode de réalisation, de type non contraint.
La figure 7 est un dispositif d'amortissement de vibrations selon un autre mode de réalisation, de type non contraint.

L'invention concerne des moyens de mise en application d'un principe connu consistant en l'amortissement de vibrations à la résonance par la mise en oeuvre d'un matériau viscoélastique choisi pour ses caractéristiques physiques adaptées aux conditions d'utilisation des pièces étudiées, en particulier pour son amortissement optimal, dans des gammes de température et de fréquence recouvrant les conditions d'utilisation des pièces à équiper, telles que roues de train, roue d'engrenage, scie circulaire, etc.

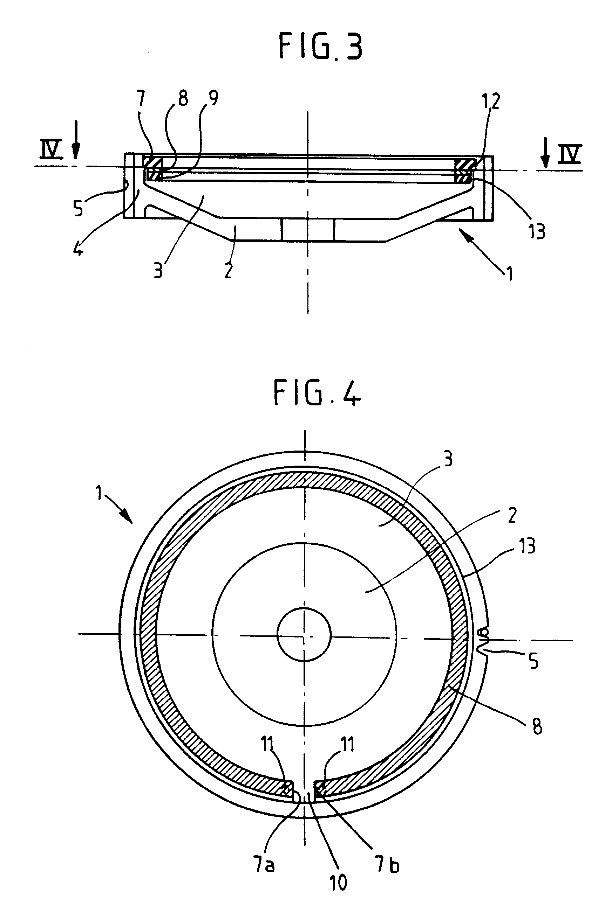

A titre d'exemple d'application il a été représenté sur les figures 3 et 4 une roue d'engrenage 1 désignée dans son ensemble et comportant un corps 2 formant une concavité 3 et à la périphérie 4 duquel sont taillées des dents d'engrènement 5.

Selon l'invention un dispositif d'amortissement de vibrations à la résonance 6 désigné dans son ensemble comporte un organe support 7 sur lequel est disposé et solidarisé par collage le matériau viscoélastique 8 se présentant sous forme de film ou de feuille. Ce matériau viscoélastique 8 support un élément de contrainte intégré 9, déformable élastiquement, afin de pouvoir dissiper de l'énergie par cisaillement, dès que la pièce équipée du dispositif entre en résonance.

Un assemblage très performant est nécessaire entre les trois couches ainsi formées, constituées respectivement par l'organe support 7, le matériau viscoélastique 8 et l'élément de contrainte 9, de manière à assurer un bon rendement dans le processus de transformation d'énergie.

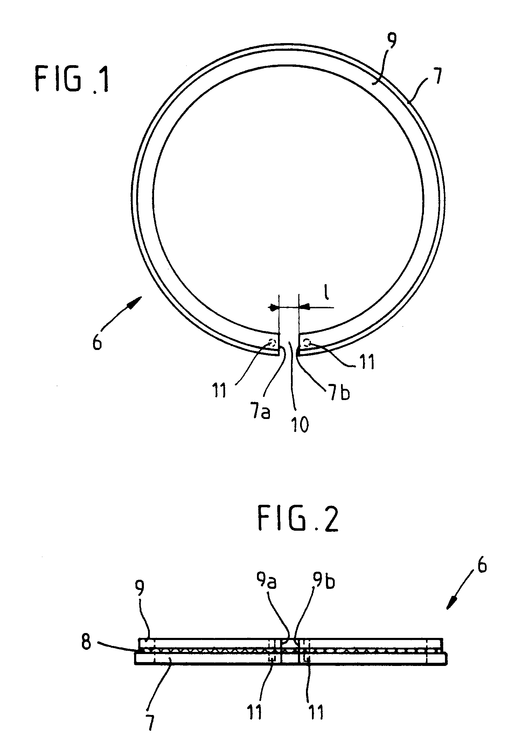

Selon l'invention l'organe support 7 constitue également un moyen de couplage du dispositif 6, puis dans son ensemble, sur la roue 1. Pour cela l'organe support 7 est avantageusement formé par un anneau plat comportant une ouverture 10 d'une largeur "1" telle à rendre l'anneau élastiquement déformable d'une position de repos (fig. 1) à une position comprimée de montage mettant en coïncidence les extrémités libres 7a, 7b dudit anneau. Des trous 11 sont ménagés à proximité de ces extrémités de manière à permettre la compression de l'anneau au montage, par l'intermédiaire d'une pince à bouts ronds.

L'organe support et de couplage 7 ainsi réalisé est de dimensions le rendant apte à se loger sous contrainte radiale permanente dans une gorge annulaire de retenue de forme correspondante 12, ménagée dans un alésage périphérique interne 13 de la roue 1. Par conséquent le diamètre de la gorge 12 sera inférieur à celui de l'organe support et de couplage 7 de manière à permettre son encliquetage élastique par expansion après avoir subi une compression pour permettre son introduction dans la gorge.

Il est à noter que l'invention est applicable non seulement aux pièces creuses comportant un alésage mais également aux arbres.

En effet les diamètres de l'élément de contrainte 9 et de la couche de matériau viscoélastique 8 sont de diamètres identiques et inférieurs à celui de l'organe support et de couplage 7 de manière telle que seul ce dernier est en contact direct avec la pièce à traiter, soit par sa périphérie externe, dans le cas d'une pièce creuse, soit par sa périphérie interne, dans le cas d'un arbre. Ceci est rendu possible par l'utilisation de segments de diamètres et de hauteur radiales appropriés permettant d'adapter le dispositif aux deux situations.

Bien que la qualité des assemblages entre chacune des trois couches du dispositif soit particulièrement étudiée et adaptée aux conditions d'utilisation, le sens préférentiel recommandé pour la pose, c'est-à-dire en dirigeant l'organe de contrainte 9 vers la roue 1 dans le présent exemple permet de garantir qu'aucune pièce ne peut se désolidariser d'une pièce traitée.

Les anneaux constituant l'organe support et de couplage 7 et l'élément de contrainte 9 sont réalisés à partir d'un acier spécial de haute dureté.

Leurs épaisseurs et section respectives sont rigoureusement déterminées afin de
- présenter une surface d'échange suffisante pour l'amortissement des vibrations,
- assurer un couplage parfait avec les pièces traitées, quel que soit le niveau de vibrations,
- présenter un amortissement optimum ciblé (en fréquence et en température).

A titre d'exemple les caractéristiques suivantes, concernant la réalisation de l'organe support et de couplage 7 et de l'élément de contrainte 8, ont donné, lors d'essais, des résultats particulièrement satisfaisants, dans un cas de figure spécifique.

| Caractéristiques "matière" | |
|---|---|
| Nature | Acier à ressort au carbone |
| Masse volumique | 7.850 kg/m³ |
| Dureté | 45- 50 HRC (unités Rockwell C) |
| | 45-520 HV (unités Vickers) |
| Module d'élasticité | 21 E4 N/mm² |
| Limite d'élasticité | 1.500 N/mm² |
| Résistance à la rupture | 1.750 N/mm² |
| Allongement avant rupture | 0.715 % |
| Procédé de trempe | bainitique isothermique |
| Traitement de surface | phosphate de zinc |

| Dimensions à l'état libre | |
|---|---|
| Diamètre extérieur | |
| Elément de contrainte | 133,5 (+ 1,6) mm |
| Organe support | 145,0 (+ 1,6) mm |
| Epaisseur | 2,82 (- 0,1) mm |

| Hauteur radiale | |
|---|---|
| Elément de contrainte | 6,46 (+ 0,15) mm |
| Organe support | 7,21 (+ 0,15) mm |
| Diamètre intérieur | 138,0 (+ 1,6) mm |
| Ouverture | 7 mm |
| Chants extérieurs | vifs |
| Chants intérieurs | arrondis |

En ce qui concerne le matériau viscoélastique 8 il peut se présenter initialement sous forme de film ou feuille ou sous forme de résines ou caoutchouc spéciaux.

Sous forme de film ou feuille ils présentent l'avantage de pouvoir couvrir une gamme d'applications standard avec peu de références.

Le point de fonctionnement optimal recherché (fréquence des vibrations à amortir - température d'utilisation) sera obtenu en déterminant l'épaisseur la plus appropriée, dans une gamme existante comportant deux voire trois formulations (adaptées à des températures d'utilisation différenciées).

L'optimisation de l'amortissement sera obtenue lors du choix de l'épaisseur de la couche de contrainte.

Dans le cas de résines et caoutchouc spéciaux, ils présentent l'avantage de faciliter la fabrication du dispositif en particulier en ce qui concerne les résines.

La quantité mise en oeuvre est ajustée au besoin, il n'y pas de pertes conséquentes de matière.

Ces résines sont en général des époxy (mono ou bicomposants) auxquels on a ajouté une charge spécifique.

La polymérisation peut se faire à froid ou à chaud selon les performances demandées (tenue en température).

Les essais du dispositif ont été effectués avec un matériau viscoélastique ayant les caractéristiques suivantes.

| Caractéristiques "matière" | |
|---|---|
| Nature | Polyuréthane |
| Masse volumique | 1.100 kg/m³ |
| Dureté (Shore A) | 34 N/mm² |
| Allongement avant rupture | 250 % |
| Température de fragilisation | -30°C |
| optimale | 95°C |
| maximale | 176°C |
| Epaisseur | 0,25 mm |

L'assemblage des trois couches est réalisé avec des adhésifs structuraux spécialement choisis pour leurs caractéristiques mécaniques (tenue aux vibrations - haute résistance aux contraintes en cisaillement - tenue en température) et leur résistance aux huiles pour moteurs.

L'assemblage des trois couches a été réalisé à partir d'un adhésif structural du type cyanoacrylate à prise très rapide.

A titre d'essais, l'analyse élémentaire du comportement vibratoire d'une roue dentée standard (diamètre nominal 170 mm) a été réalisée avant puis après mise en oeuvre du dispositif amovible d'amortissement vibratoire.

La procédure retenue pour caractériser l'amortissement de cette pièce consiste à mesurer la vitesse de décroissance du niveau de l'accélération vibratoire, prélevé en proximité de la denture (direction axiale), une force d'excitation étant préalablement appliquée sur le pignon, par choc (marteau d'impact).

La fréquence pour laquelle la vitesse de décroissance a été mesurée a été déterminée à partir de la mesure de la répons spectrale de la roue, à l'aide d'un dispositif approprié.

Cette mesure a mis en évidence une résonance marquée, présentant un faible amortissement à environ 2.350 Hz. Toutes les mesures ont été effectuées à 20°C.

Les résultats obtenus sont les suivants.
- Amortissement avant traitement
   La première résonance marquée est à 2.350 Hz.
   Cette valeur se situe dans la bande du 1/3 d'octave qui a pour fréquence centrale 2.500 Hz, les mesures de décroissance ont donc été réalisées avec le filtre 1/3 d'octave calé sur cette dernière.
   La durée nécessaire pour observer une décroissance du signal de 60 dB (réf. 10⁻⁵ m.s⁻²) est de 5,5 secondes.
- Amortissement après traitement
   Dans les conditions précitées, la durée de décroissance du signal de réponse est inférieure à 0,24 seconde, ce qui correspond à un amortissement relatif supérieur à 22.

Les résultats des mesures confirment l'excellent amortissement obtenu avec le dispositif selon l'invention.

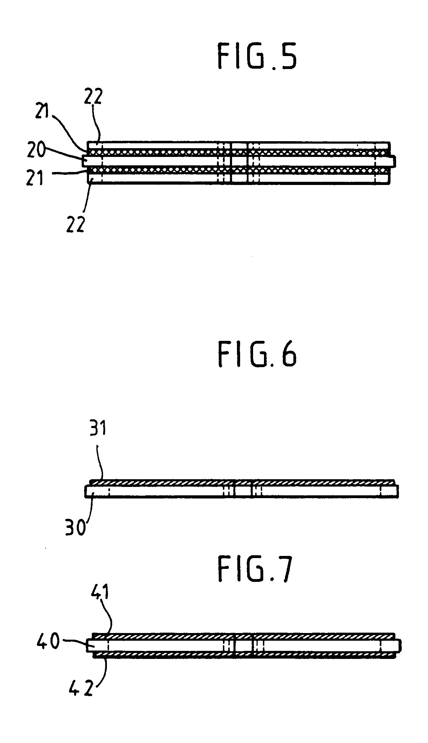

Selon une variante de réalisation représentée sur la figure 5 le dispositif d'amortissement est constitué par un organe support et de couplage 20 de part et d'autre duquel sont respectivement disposés un matériau viscoélastique 21 et un élément de contrainte 22 assemblés entre eux selon les techniques précédemment décrites.

Les avantages obtenus sont :
- Elargissement de la gamme d'efficacité, en température ou en fréquence, grâce à la complémentarité spectrale des deux configurations.
- Renforcement de l'efficacité, à la température et à la fréquence prévues à l'origine, grâce au doublement de l'aire de la surface "d'échange" du modèle standard (deux configurations identiques de part et d'autre de la couche de couplage). Le nombre d'empilements n'est a priori pas limité.

Selon une autre variante de réalisation représentée sur la figure 6, le dispositif d'amortissement comporte uniquement un organe support et de couplage 30 sur lequel est disposé un matériau viscoélastique 31, ne supportant pas ici un élément de contrainte.

Selon une autre variante de réalisation représentée sur la figure 7, le dispositif d'amortissement comporte un organe support et de couplage 40 de part et d'autre duquel sont disposées des couches 41 et 42 de matériau viscoélastique, ne supportant pas d'élément de contrainte.

Ces derniers modèles non contraints sont d'une efficacité inférieure à celle des modèles contraints, mais ils peuvent néanmoins trouver une application dans des cas spécifiques.

Il est enfin à noter que l'organe support et de couplage et l'élément de contrainte peuvent être réalisés à partir de matériaux composites du type strates de verre (tissus) et résines d'imprégnation (polyester, etc.), ou tout matériau à venir qui présenterait des caractéristiques physiques appropriées.

Tous les matériaux viscoélastiques disponibles à ce jour, ainsi que les procédés d'assemblage existants (entre les différentes couches), peuvent être utilisés sans toutefois présenter un caractère exhaustif.

De même l'organe de contrainte peut, en variante, être positionné au montage du côté extérieur par rapport à l'émetteur de vibrations, avec les mêmes avantages du point de vue de l'efficacité anti-vibrations, mais on court le risque de voir l'organe de contrainte se trouver libéré en cas de décollement des couches.

## Revendications

1. Dispositif d'amortissement de vibrations à la résonance d'un émetteur, mettant en oeuvre un matériau viscoélastique dissipant l'énergie de vibration par interaction mutuelle de parties constitutives dudit matériau, ce dispositif étant relié à l'émetteur par l'intermédiaire d'un moyen de couplage, caractérisé en ce que le matériau viscoélastique (8) est disposé de manière solidaire sur un organe support (7) pour former avec ce dernier un ensemble unitaire amovible (7 à 9; 20 à 22; 30, 31; 40 à 42) et en ce que ledit organe support (7) forme par lui-même moyen de couplage par lequel ledit ensemble unitaire est apte à être couplé à l'émetteur (1).

2. Dispositif d'amortissement selon la revendication 1 caractérisé en ce que l'organe support (7) est formé par un anneau ouvert, élastiquement déformable, apte à se loger sous contrainte radiale permanente dans une gorge annulaire (12) de retenue correspondante de l'émetteur (1), par encliquetage élastique par expansion ou par compression et constitue le moyen de couplage.

3. Dispositif d'amortissement selon la revendication 1 ou 2 caractérisé en ce que le matériau viscoélastique (8) est enserré sous forme de couche entre l'organe support (7) et un élément de contrainte intégré (9) déformable élastiquement de manière à dissiper l'énergie de vibration par cisaillement.

4. Dispositif d'amortissement selon la revendication 3 caractérisé en ce que l'organe support (7) et l'organe de contrainte (9) constituent avec le matériau viscoélastique (8) une structure composite multicouches, comportant au moins trois couches liées entre elles.

5. Dispositif d'amortissement selon les revendications 3 ou 4 caractérisé en ce que l'organe de contrainte (9) est disposé au montage vers l'émetteur de vibrations (1).

## Claims

1. A device for damping vibrations at resonance of an emitter using a viscoelastic material having the function of dissipating the vibration energy by mutual interaction of constituent parts of said material, said device being coupled with the emitter through a coupling means, characterized in that the viscoelastic material (8) is rigidly supported on a supporting member (7) so as to form with these latter a removable unitary assembly (7 to 9; 20 to 22; 30, 31; 40 to 42) and in that said supporting member (7) forms by itself coupling means for said unitary assembly to be coupled with the emitter (1).

2. A damping device according to calim 1, characterized in that the supporting member (7) is formed by an elastically deformable open ring which is fitted for lodging under permanent radial stress within a corresponding annular retaining groove (12) of the emitter (1) by resilient snap-engagement under expansion or compression and constitutes the coupling means.

3. A damping device according to calim 1 or 2, characterized in that the viscoelastic material (8) is clamped in the form of a layer between the supporting member (7) and an elastically deformable integrated stressing element (9) in order to dissipate the vibration energy by shearing.

4. A damping device according to claim 3, characterized in that the supporting member (7) and the stressing element (9) constitute with the viscoelastic material (8) a composite multilayer structure comprising at least three layers bonded to each other.

5. A damping device according to claim 3 or 4, characterized in that the stressing element (9) is positioned at the time of assembly so as to be directed towards the vibrations emitter (1).

## Patentansprüche

1. Schwingungsdämpfungseinrichtung für die Resonanz eines Senders, die ein viskoelastisches Material einsetzt, das die Schwingungsenergie durch gegenseitige Wechselwirkung der bestandgebenden Teile dieses Materials ableitet, wobei die Einrichtung mittels eines dazwischenliegenden Verbindungsmittels mit dem Sender verbunden ist,
**dadurch gekennzeichnet**,
daß das viskoelastische Material (8) aus einem Stück auf einer Trägervorrichtung (7) angeordnet ist, um mit letzterer einen lösbaren einheitlichen Aufbau zu bilden (7 bis 9, 20 bis 22, 30 bis 32, 40 bis 42), und daß diese Trägervorrichtung (7) selbst Verbindungsmittel bildet, durch die der einheitliche Aufbau zur Koppelung mit dem Sender (1) geeignet ist.

2. Dämpfungseinrichtung nach Anspruch 1,
**dadurch gekennzeichnet**,
daß die Trägervorrichtung (7) durch einen elastisch verformbaren, offenen Ring gebildet wird, der geeignet ist, sich unter Spannung durch elastisches Einrasten durch Ausdehnung oder Komprimieren radial dauerhaft in eine ringförmige Vertiefung (12) der entsprechenden Halterung des Senders (1) einzulegen, und das Verbindungsmittel bildet.

3. Dämpfungseinrichtung nach Anspruch 1 oder 2,
**dadurch gekennzeichnet**,
daß das viskoelastische Material (8) in Form einer Schicht zwischen der Trägervorrichtung (7) und einem integrierten Spannelement (9) eingespannt ist, das elastisch verformbar ist, um die Schwingungsenergie durch Scherbeanspruchung abzuleiten.

4. Dämpfungseinrichtung nach Anspruch 3,
**dadurch gekennzeichnet**,
daß die Trägervorrichtung (7) und die Spannvorrichtung (9) mit dem viskoelastischen Material (8) eine mehrschichtige Verbundstruktur darstellen, die mindestens drei miteinander verbundene Schichten umfaßt.

5. Dämpfungseinrichtung nach Anspruch 3 oder 4,
**dadurch gekennzeichnet**,
daß die Spannvorrichtung (9) in Richtung auf den Schwingungssender (1) angeordnet ist.
